# EUROPÄISCHE PATENTSCHRIFT

(11) **EP 2 444 707 B1**
(45) Veröffentlichungstag und Bekanntmachung des Hinweises auf die Patenterteilung: **12.08.2015**
(21) Anmeldenummer: 11005185.1
(22) Anmeldetag: 27.06.2011
(51) Int. Cl.: F16L 33/34, F16L 47/02

(54) **Rohranordnung**
Tubing assembly
Agencement de tubes

(30) Priorität: 23.06.2010 DE 102010024691
(43) Veröffentlichungstag der Anmeldung: 25.04.2012
(73) Patentinhaber: NORMA Germany GmbH, 63477 Maintal (DE)
(72) Erfinder: Eckardt, Carsten, 63486 Bruchköbel (DE); Hartmann, Peter, 63741 Aschaffenburg (DE); Strauss, Oliver, 61130 Nidderau (DE); Foltyn, Peter, 74211 Leingarten (DE)
(74) Vertreter: Patentanwälte Olbricht Buchhold Keulertz

(56) Entgegenhaltungen:
- DE-B3-102008 006 068
- FR-A1- 2 872 084
- JP-A- 2004 100 765
- US-A1- 2005 127 668

## Beschreibung

Die Erfindung betrifft eine Rohranordnung mit einem Rohr und einer Rohrkupplung, wobei die Rohrkupplung an einer Stirnseite eine umlaufende Nut mit einem Nutgrund aufweist, in die das Rohr eingesteckt ist und in der das Rohr mit der Rohrkupplung verschweißt ist.

DE 10 2008 006 068 B3 beschreibt ein Schweißsystem für mehrschichtige Verbundrohre aus Kunststoff und Metall. Hier ist eine Rohrkupplung mit einer umlaufenden Nut an einer Stirnseite versehen, die einen Nutgrund aufweist. In die Nut wird ein Rohr eingesteckt. Das Rohr wird mit der Rohrkupplung verschweißt. Zum Verschweißen wird eine Heizeinrichtung verwendet, die mit zwei Heizringen verbunden ist. Die beiden Heizringe weisen Konturen auf, die die Negativform der Kontur von Rohr und Rohrkupplung bilden. Nachdem Rohr und Rohrkupplung mit Hilfe der Heizvorrichtung erhitzt worden sind, wird die Heizvorrichtung entfernt und das Rohr wird in die Rohrkupplung eingeschoben, wobei die erwärmten Materialien von Rohr und Rohrkupplung miteinander verschweißen. Die Nut der Rohrkupplung ist in Umfangsrichtung innen und außen mit durchgehenden Wänden versehen.

US 2005/0127668 A1 zeigt eine gasundurchlässige Rohrverbindung und ein Verfahren zu ihrer Herstellung. Hier ist eine Rohrkupplung vorgesehen, die mit einem Rohr verbunden werden kann. Die Rohrkupplung weist an einer Stirnseite eine Nut auf, in die das Rohr eingesteckt werden kann. Die Verbindung zwischen dem Rohr und der Rohrkupplung kann durch Reibschweißen erfolgen.

FR 2 872 084 A1 beschreibt eine Rohranordnung mit einem Rohr und einer Rohrkupplung. Die Rohrkupplung weist an einer Stirnseite eine umlaufende Nut auf, in die das Rohr eingesteckt ist und in der das Rohr mit der Rohrkupplung verschweißt ist. Das Verschweißen kann hier durch Reibschweißen erfolgen.

Eine Rohranordnung der eingangs genannten Art ist insbesondere im Fahrzeugbau weit verbreitet. Beispielsweise dient das Rohr dazu, einen Kraftstoff von einem Kraftstoffbehälter zu einem Kraftstoffverbraucher, beispielsweise eine einen Verbrennungsmotor versorgende Einspritzpumpe, zu transportieren. Damit die Montage und später auch die Reparatur erleichtert wird, ist das Rohr fest und in der Regel unlösbar mit einer Rohrkupplung verbunden. Die Rohrkupplung kann dann mit einem entsprechenden Stut-zen, im genannten Beispiel am Tank oder an der Einspritzpumpe, in Eingriff kommen. Hierzu wird vielfach der Stutzen in die Rohrkupplung eingesteckt und verrastet dort.

Um die Verbindung zwischen dem Rohr und der Rohrkupplung herzustellen, wird das Rohr in die Nut an der Stirnseite der Rohrkupplung eingesteckt und dort verschweißt. Zum Verschweißen verwendet man vielfach das so genannte Reibschweißen, bei dem die Rohrkupplung gegenüber dem Rohr in der Nut gedreht wird. Die dabei entstehende Reibungswärme schmilzt das Material von Rohr und/oder Rohrkupplung auf, so dass sich eine stoffschlüssige Verbindung zwischen dem Rohr und der Rohrkupplung ergibt.

Man hat jedoch festgestellt, dass in manchen Fällen die Qualität der Schweißverbindung zwischen dem Rohr und der Rohrkupplung nicht ausreichend ist. Dies ist vielfach nicht unmittelbar nach der Herstellung der Rohranordnung feststellbar, sondern ergibt sich erst nach einer gewissen Betriebszeit. Man kann unter ungünstigen Umständen beobachten, dass das durch die Rohranordnung strömende Fluid zwischen der Rohrkupplung und dem Rohr austritt, was in vielen Fällen nicht zulässig ist.

Der Erfindung liegt die Aufgabe zugrunde, eine hohe Qualität der Schweißverbindung zwischen Rohr und Rohrkupplung sicherzustellen.

Diese Aufgabe wird bei einer Rohranordnung der eingangs genannten Art dadurch gelöst, dass die Nut über mindestens eine durchgehende Öffnung mit der Umgebung der Rohrkupplung verbunden ist.

Durch die durchgehende Öffnung steht also die Nut entweder mit der Außenseite der Rohrkupplung, d.h. mit der Umgebungsluft, in Verbindung, oder mit dem Inneren der Rohrkupplung, also dem Bereich, durch den später das durch die Rohranordnung strömende Fluid strömt.

Die Öffnung vermindert zwar den Bereich, in den das Rohr und die Rohrkupplung, d.h. die Innenseite der Nut, miteinander in Kontakt treten können. Die durchgehende Öffnung ermöglicht es jedoch, dass eingeschlossene Luft zwischen der Rohrkupplung und dem rotierenden Rohr beim Reibschweißen entweicht. Dadurch wird das Entstehen von Vakuolen im Bereich der Schweißverbindung verhindert. Die Schweißverbindung erhält eine bessere Qualität. Undichtigkeiten werden vermieden und das Risiko einer Schwächung der Schweißverbindung wird vermindert.

Vorzugsweise geht die Öffnung von einem Schweißbereich zwischen dem Rohr und der Rohrkupplung aus. Damit kann man mit hoher Zuverlässigkeit sicherstellen, dass die zwischen dem Rohr und der Rohrkupplung eingeschlossene Luft den Schweißbereich nicht negativ beeinträchtigt, sondern durch die durchgehende Öffnung nach außen entweichen kann.

Vorzugsweise durchsetzt die Öffnung den Nutgrund zumindest teilweise. Man strebt an, dass die Reibschweißverbindung zwischen dem Rohr und der Rohrkupplung am Nutgrund erfolgt, also zwischen der Stirnseite des Rohres und dem Nutgrund. Hier kann man nämlich in vorteilhafter Weise dafür sorgen, dass die Stirnseite des Rohres und der Nutgrund mit einer gewissen Kraft gegeneinander gedrückt werden, so dass man die zum Reibschweißen benötigte hohe Temperatur relativ schnell erreichen kann. Wenn die Öffnung den Nutgrund durchsetzt, zumindest teilweise, dann ist sichergestellt, dass jegliche Luft, die sich dort befindet, bei einer Drehung des Rohres gegenüber der Rohrkupplung zu der durchgehenden Öffnung gefördert wird und dort entweichen kann.

Vorzugsweise ist die Nut zwischen einer radial inneren Wand und einer radial äußeren Wand ausgebildet und die Öffnung ist in einer der Wände ausgebildet. Dies erleichtert die Fertigung. Die Wände, die die Nut begrenzen, sind in der Regel leicht zugänglich. Die Öffnung muss dann nur eine relativ dünne Materialstärke durchdringen. Wenn die Rohrkupplung als Spritzgussteil ausgebildet ist, dann kann man die Öffnung beim Spritzgießen mit herstellen.

Hierbei ist bevorzugt, dass die Öffnung in der radial äußeren Wand ausgebildet ist. Damit wird das Innere der Rohrkupplung unverändert belassen und man kann bisher verwendete und optimierte Gestaltungen für das Innere der Rohrkupplung weiter verwenden.

Hierbei ist bevorzugt, dass die Öffnung den Nutgrund überlappt oder mit ihm abschließt. Dies ist eine einfache Möglichkeit, um sicherzustellen, dass die Schweißzone mit dem Nutgrund in Verbindung steht.

Bevorzugterweise weist die Öffnung eine Länge und einen Querschnitt auf, wobei die kleinste Erstreckung des Querschnitts mindestens so groß ist wie die Länge der Öffnung. Damit wird auf einfache aber wirkungsvolle Weise das Risiko vermindert, dass sich die Öffnung beim Schweißen so weit verschließt, dass keine Luft mehr austreten kann.

Vorzugsweise weist die Öffnung einen rechteckförmigen Querschnitt auf. Damit hat die Öffnung eine gewisse Erstreckung in Umfangsrichtung der Nut und zwar auch am Nutgrund. Die Gefahr, dass sich die Öffnung bereits in unmittelbarer Nähe des Nutgrundes verschließt, wird dadurch klein gehalten.

Vorzugsweise ist die Öffnung mit ihrer Längserstreckung parallel zur Längserstreckung des Rohres in der Nut gerichtet. Dies erleichtert die Formgebung.

Auch ist von Vorteil, wenn die Öffnung zumindest teilweise mit aufgeschmolzenem Material gefüllt ist. Wenn beispielsweise stirnseitig am Rohr zu viel Material aufgeschmolzen worden ist, ergibt sich ein definierter Abfluss für die Schmelze über die Öffnung. Eine Verengung des Innenquerschnitts erfolgt weder beim Rohr noch bei der Rohrkupplung. Darüber hinaus ergibt sich eine mechanische Verankerung, wenn die Öffnung mit Schmelze gefüllt ist.

Im Allgemeinen kann man sagen, dass die Öffnung ein guter Schweißindikator ist. Es können fehlerhaft eingerichtete Schweißprozesse visuell am Bauteil ohne zerstörende Prüfung direkt erkannt werden. Unzulässig kurz verschweißte Rohranordnungen können ebenfalls erkannt werden. Eine automatische Abfrage wäre für Folgeprozesse ebenfalls denkbar, beispielsweise eine Tiefenmessung an der Öffnung.

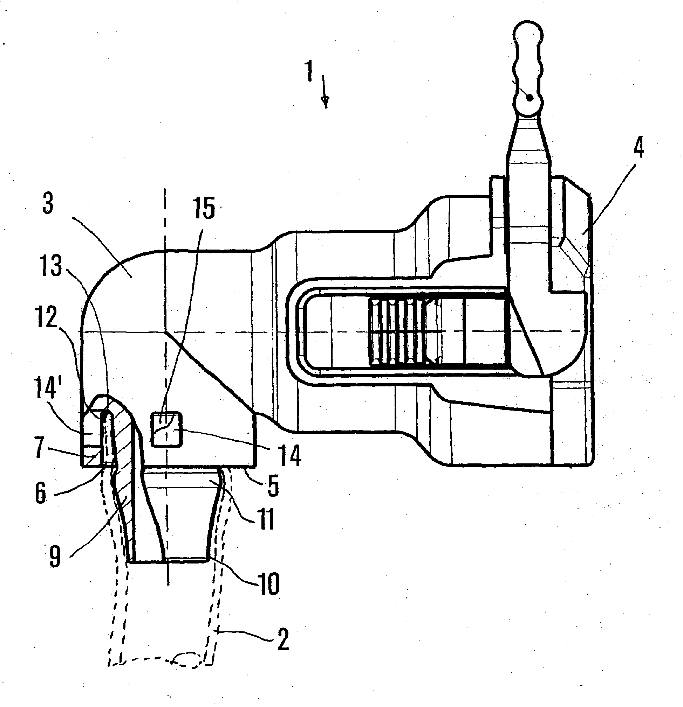

Die Erfindung wird im Folgenden anhand eines bevorzugt ten Ausführungsbeispiels in Verbindung mit der Zeichnung beschrieben. Hierin zeigt die
einzige Fig.: eine Rohranordnung, teilweise im Aufriss.

Die Rohranordnung 1 weist ein Rohr 2 und eine Rohrkupplung 3 auf. Das Rohr 2 ist hier gestrichelt dargestellt, um seinen Verlauf in der Rohrkupplung 3 darzustellen, die zu diesem Zweck teilweise aufgerissen ist.

Die Rohrkupplung 3 weist in an sich bekannter Weise an einem Ende eine Befestigungsgeometrie 4 auf, mit der sie an einem nicht näher dargestellten Anschluss befestigt werden kann, beispielsweise durch eine Verrastung.

Die Rohrkupplung 3 weist am anderen Ende an einer Stirnseite 5 eine umlaufende Nut 6 auf. Die Nut 6 ist zwischen einer radial äußeren Wand 7 und einer radial inneren Wand 8 ausgebildet, wobei sich die radial innere Wand 8 in einem Stutzen 9 fortsetzt, auf den das Rohr 2 aufgeschoben werden kann. Mit "Rohr" sollen hier nicht nur starre Rohre gemeint sein, sondern beispielsweise auch flexible Rohre oder Schläuche, die auf den Stutzen 9 aufgeschoben werden können. Der Stutzen 9 weist hierzu ein verjüngtes Ende 10 auf, um das Aufschieben zu erleichtern. Ferner ist eine Verdickung 11 vorgesehen, die eine Verbesserung beim Halten des Rohres 2 auf dem Stutzen 9 bewirkt.

Die Nut 6 weist einen Nutgrund 12 auf, an dem die Stirnseite 13 des Rohres 2 anliegt, wenn das Rohr 2 in die Nut 6 eingesetzt worden ist. Wenn dann das Rohr 2 gegenüber der Rohrkupplung 3 oder die Rohrkupplung 3 gegenüber dem Rohr 2 gedreht wird und die Stirnseite 13 mit einer gewissen Kraft gegen den Nutgrund 12 gedrückt wird, dann ergibt sich zwischen der Stirnseite 13 und dem Nutgrund 12 eine erhöhte Temperatur durch die dabei erfolgende Reibung. Die Temperatur steigt so weit an, dass das Rohr 2 und die Rohrkupplung 3 dann im Bereich des Nutgrunds 12 miteinander verschweißen.

In der radial äußeren Wand 7 sind in Umfangsrichtung verteilt mehrere durchgehende Öffnungen 14, 14' vorgesehen, durch die die Nut 6 mit der Umgebung der Rohrkupplung 3 verbunden ist. Dargestellt ist, dass die Öffnungen 14, 14' in der radial äußeren Wand 7 ausgebildet sind. Es ist aber auch möglich, dass die Öffnungen 14 in der radial inneren Wand 8 ausgebildet sind, wenngleich die Ausbildung in der radial äußeren Wand 7 bevorzugt ist. Es ist auch möglich, dass Öffnungen 14, 14' in beiden Wänden 7, 8 ausgebildet sind.

Es ist deutlich zu erkennen, dass zumindest die in der Figur links dargestellte Öffnung 14' den Schweißbereich zwischen dem Rohr 2 und der Rohrkupplung 3 überlappt, nämlich die Verbindung zwischen dem Nutgrund 12 und der Stirnseite 13 des Rohres.2. Wenn die Öffnung 14, 14' einen anderen Verlauf hat, kann man die Öffnung auch so anordnen, dass die Öffnung 14, 14' von dem Schweißbereich zwischen dem Rohr 2 und der Rohrkupplung 3 aus, den Nutgrund 12 also zumindest teilweise durchsetzt.

Die Öffnung 14, 14' überlappt den Nutgrund 12 oder schließt mit ihm ab. Dadurch ist sichergestellt, dass bei einer Rotation des Rohres 2 gegenüber der Rohrkupplung 3 möglicherweise eingeschlossene Luft immer zu einer Öffnung 14, 14' transportiert wird und dort entweichen kann.

Die Öffnung 14, 14' hat einen rechteckigen Querschnitt. Die längere Seite erstreckt sich etwa parallel zur Längserstreckung des Rohres 2 in der Nut 6. Die kürzere Seite erstreckt sich senkrecht dazu. Wie man durch einen Vergleich der beiden Öffnungen 14, 14' in der Figur erkennen kann, ist die kleinste Erstreckung des Querschnitts der Öffnung 14, also die Schmalseite der Öffnung 14, größer als die Dicke der radial äußeren Wand 7. Diese Dicke definiert die Länge der Öffnung 14'.

Damit wird das Risiko, dass man beim Reibschweißen zu viel Material aufschmilzt und dieses aufgeschmolzene Material die Reibschweiß-Verbindung stört, vermindert. Aufgeschmolzenes Material 15 kann die Öffnung 14 teilweise füllen. Dies ist sogar von Vorteil, weil man dann eine mechanische Verankerung zwischen dem Rohr 2 und der Rohrkupplung 3 erhält.

Die dargestellte Ausgestaltung hat eine Reihe von Vorteilen:
Man vermindert die Entstehung von Vakuolen durch eine definierte Entlüftung. Man ermöglicht einen gezielten Abfluss von aufgeschmolzenem Material, das für die Schweißverbindung nicht benötigt-wird. Es wird eine mechanische Verankerung möglich, wenn die Öffnung 14 bewusst mit aufgeschmolzenem Material 15 gefüllt wird.

Darüber hinaus bildet die Öffnung 14 einen guten Schweißindikator. Fehlerhaft eingerichtete Schweißprozesse können visuell direkt am Bauteil erkannt werden, ohne dass eine zerstörende Prüfung erforderlich wird. Dies gilt auch für unzulässig kurzverschweißte Verbindungen.

Schließlich ist es möglich, die Öffnung für eine automatisch Abfrage, beispielsweise durch eine Tiefenmessung, für Folgeprozesse zu nutzen.

## Patentansprüche

1. Rohranordnung (1) mit einem Rohr (2) und einer Rohrkupplung (3), wobei die Rohrkupplung (3) an einer Stirnseite (5) eine umlaufende Nut (6) mit einem Nutgrund (12) aufweist, in die das Rohr (2) eingesteckt ist und in der das Rohr (2) mit der Rohrkupplung (3) verschweißt ist, wobei die Nut (6) über mindestens eine durchgehende Öffnung (14, 14') mit der Umgebung der Rohrkupplung (3) verbunden ist, die Öffnung (14, 14') von einem Schweißbereich zwischen dem Rohr (2) und der Rohrkupplung (3) ausgeht, die Öffnung (14, 14') den Nutgrund (12) zumindest teilweise durchsetzt und die Nut (6) zwischen einer radial inneren Wand (8) und einer radial äußeren Wand (7) ausgebildet ist, **dadurch gekennzeichnet, dass** die Öffnung (14, 14') in der radial äußeren Wand (7) ausgebildet ist und die Öffnung (14, 14') den Nutgrund (12) überlappt oder mit ihm abschließt.

2. Rohranordnung nach Anspruch1, **dadurch gekennzeichnet, dass** die Öffnung (14, 14') eine Länge und einen Querschnitt aufweist, wobei die kleinste Erstreckung des Querschnitts mindestens so groß ist wie die Länge der Öffnung (14, 14').

3. Rohranordnung nach Anspruch 1 oder 2, **dadurch gekennzeichnet, dass** die Öffnung (14, 14') einen rechteckförmigen Querschnitt aufweist.

4. Rohranordnung nach Anspruch 3, **dadurch gekennzeichnet, dass** die Öffnung (14, 14') mit ihrer Längserstreckung parallel zur Längserstreckung des Rohres (2) in der Nut (6) gerichtet ist.

5. Rohranordnung nach einem der Ansprüche 1 bis 4, **dadurch gekennzeichnet, dass** die Öffnung (14, 14') zumindest teilweise mit aufgeschmolzenem Material (15) gefüllt ist.

## Claims

1. Tubing assembly (1) using a tube (2) and a tube coupling (3), where the tube coupling (3) has a circumferential groove (6) at a front side (5), with a groove base (12), into which the tube (2) is inserted, and in which it is welded with the tube coupling (3), where the groove (6) is connected with the surroundings of the tube coupling (3) by at least one complete opening (14, 14'), the opening (14, 14') starts from a welding area between the tube (2) and tube coupling (3), the opening (14, 14') pushes through the groove base (12) at least partially and the groove (6) is formed between a radially inner wall (8) and a radially outer wall (7), identified by the fact that the opening (14, 14') is formed in the radially outer wall (7) and the opening (14, 14') overlaps the groove base (12) or closes with it.

2. Tubing assembly as per claim 1, identified by the fact that the opening (14, 14') has a length and cross-section, where the slightest extension of the cross-section is at least as much as the length of the opening (14, 14').

3. Tubing assembly as per claim 1 or 2, identified by the fact that the opening (14, 14') has a rectangular cross-section.

4. Tubing assembly as per claim 3, identified by the fact that the opening (14, 14'), with its longitudinal extension parallel to that of the tube (2), is directed in the groove (6).

5. Tubing assembly as per 1 of the claims from 1 to 4, identified by the fact that the opening (14, 14') is at least partly filled with fused material (15).

## Revendications

1. Agencement de tubes (1) avec un tube (2) et un raccord de tube (3), où le raccord de tube (3) présente sur un côté frontal (5) une rainure (6) tournante avec un fond de rainure (12), dans laquelle le tube (2) est enfiché et dans laquelle le tube (2) est soudé au raccord de tube (3), où la rainure (6) est reliée par au moins une ouverture continue (14, 14') à l'environnement du raccord de tube (3), l'ouverture (14, 14') sort d'une zone soudée entre le tube (2) et le raccord de tube (3), l'ouverture (14, 14') traverse au moins en partie le fond de rainure (12) et la rainure (6) est réalisée entre une paroi radialement intérieure (8) et une paroi radialement extérieure (7), **caractérisé en ce que** l'ouverture (14, 14') est réalisée dans la paroi radialement extérieure (7) et l'ouverture (14, 14') recouvre le fond de rainure (12) ou se termine avec lui.

2. Agencement de tubes selon la revendication 1, **caractérisé en ce que** l'ouverture (14, 14') présente une longueur et une section transversale, où la plus petite étendue de la section transversale est au moins aussi grande que la longueur de l'ouverture (14, 14').

3. Agencement de tubes selon la revendication 1 ou 2, **caractérisé en ce que** l'ouverture (14, 14') présente une section transversale rectangulaire.

4. Agencement de tubes selon la revendication 3, **caractérisé en ce que** l'ouverture (14, 14') est dirigée avec son étendue longitudinale parallèlement à l'étendue longitudinale du tube (2) dans la rainure (6).

5. Agencement de tubes selon l'une quelconque des revendications 1 à 4, **caractérisé en ce que** l'ouverture (14, 14') est remplie au moins en partie par du matériau fondu (15).
